# EUROPÄISCHE PATENTSCHRIFT

(11) **EP 4 606 951 B1**
(45) Veröffentlichungstag und Bekanntmachung des Hinweises auf die Patenterteilung: **28.01.2026**
(21) Anmeldenummer: 24158795.5
(22) Anmeldetag: 21.02.2024
(51) Int. Cl.: E01C 19/48, B60K 1/04, B60K 15/03

(54) **ERHÖHUNG DER EINSATZDAUER EINER STRASSENBAUMASCHINE**
INCREASING THE OPERATIONAL TIME OF A ROAD CONSTRUCTION MACHINE
AUGMENTATION DE LA DURÉE DE SERVICE D'UN ENGIN DE CONSTRUCTION ROUTIÈRE

(43) Veröffentlichungstag der Anmeldung: 27.08.2025
(73) Patentinhaber: Joseph Vögele AG, 67067 Ludwigshafen (DE)
(72) Erfinder: ÖTTINGER, Klaus, ALTLUßHEIM (DE)
(74) Vertreter: Grünecker Patent- und Rechtsanwälte PartG mbB

(56) Entgegenhaltungen:
- DE-U1- 202009 004 083
- DE-U1- 29 911 151
- US-B2- 9 109 333

## Beschreibung

Die vorliegende Erfindung bezieht sich auf eine Straßenbaumaschine umfassend einen Materialbunkereinsatz mit einem sekundären Speicher, ein Verfahren zum Austauschen eines Materialbunkereinsatzes mit einem sekundären Speicher an einer Straßenbaumaschine sowie ein Verfahren zum Betreiben einer Straßenbaumaschine.

### Stand der Technik

Straßenbaumaschinen sind aus dem Stand der Technik allgemein bekannt. Diese können zum Beispiel ein Straßenfertiger zum Herstellen einer Einbauschicht aus einem Einbaumaterial oder ein Beschickerfahrzeug zum Beliefern des Straßenfertigers mit dem Einbaumaterial sein.

Herkömmliche Straßenbaumaschinen verwenden üblicherweise einen Dieselkraftstoff als Energiequelle. Die chemische Energie des Dieselkraftstoffs wird über einen Dieselmotor in mechanische Energie umgewandelt, mit welcher Aktuatoren betrieben werden. Die Aktuatoren führen üblicherweise rotatorische Bewegungen oder translatorische Bewegungen aus. Mittels dieser Bewegungen führt die Straßenbaumaschine dann ihre Arbeit und Teilaufgaben aus. Dies wäre für einen Straßenfertiger z.B. Fahren, Lenken, Material fördern, Material verteilen, Nivellieren, Material verdichten. Für ein Beschickerfahrzeug wären dies z.B. Fahren, Lenken, Material fördern. Rotationsbewegungen werden beispielsweise mit Hilfe von Hydraulikmotoren umgesetzt, translatorische Bewegungen beispielsweise durch Hydraulikzylinder. Für die Bohlenheizung eines Straßenfertigers wird mechanische Energie über einen Generator in elektrische Energie umgewandelt, diese wird dann in Wärme umgewandelt. Nachteilig an diesem Antriebsmechanismus sind die Verwendung fossiler Brennstoffe (z.B. Dieselkraftstoff) und die damit verbundenen Abgasemissionen.

Aus dem Stand der Technik ist ferner bekannt, dass Straßenbaumaschinen elektrisch betrieben werden können. Bei elektrifizierten Straßenbaumaschinen ist aber die geringere Reichweite der Straßenbaumaschine problematisch. Derzeitige Straßenbaumaschinen mit Dieseltank sind so ausgelegt, dass diese üblicherweise mit einer Tankfüllung maximal 10 Stunden lang angetrieben werden und damit eine bestimmte Reichweite erreichen können. Dabei wird von einer hohen Auslastung der Straßenbaumaschine ausgegangen. Beim Einsatz eines Energiespeichers für eine elektrifizierte Straßenbaumaschine, wie beispielsweise einer Batterie, zum Beispiel eines Akkumulators (Akku), als Energiequelle und elektrischer Antriebsstränge, müssten zum Erreichen ähnlicher Reichweiten deutlich größere und schwerere Energiespeicher eingesetzt werden, aufgrund der geringeren Energiedichte eines Akkus im Vergleich zu der Energiedichte von Dieselkraftstoff. Da dies nur in begrenztem Maße realisiert werden kann, ohne die Straßenbaumaschine drastisch zu vergrößern, folgt in Konsequenz eine deutliche Einschränkung der Arbeitszeit bzw. Arbeitsmenge, die eine elektrisch betriebene Straßenbaumaschine erbringen kann. Aufgrund der geringeren Reichweite einer elektrifizierten Straßenbaumaschine mit einem Akku als Energiequelle müsste der Akku ein- oder mehrmalig getauscht bzw. nachgeladen werden. Alternativ müsste die Straßenbaumaschine mit dem leeren Akku von der Baustelle weggefahren werden, damit als Ersatz eine andere Straßenbaumaschine mit einem geladenen Akku eingesetzt werden kann. Folglich müsste die Baustelle kurzzeitig oder für einen längeren Zeitraum unterbrochen werden. Das Unterbrechen der Baustelle ist nicht nur nachteilig für die Energieeffizienz der Straßenbaumaschine (z.B. müssen die Bohle und die Materialförderer nach der Unterbrechung wieder aufgewärmt werden), sondern auch für die Einbauqualität. Denn Unterbrechungen führen potenziell zu Anfahrmarken, Entmischung, Temperaturabfall des Mischguts, Verdichtungsproblemen, bis hin zum Erkalten und Verfestigen des Einbaumaterials in der Straßenbaumaschine.

DE 20 2009 004 083 U1 betrifft einen Bunker-Einsatz für einen Straßenfertiger mit einem viereckigen, trichterförmigen, oben offenen Grundkörper mit vier eine Bodenöffnung begrenzenden Seitenwänden und einem zur Bodenöffnung offenen Seitenauslass in einer Seitenwand. Der Seitenauslass im Grundkörper und/oder der Grundkörper sind im Bereich des Seitenauslasses in Weitenrichtung des Seitenauslasses verstellbar ausgebildet.

US 9 109 333 B2 betrifft einen Trichter einer Einbaumaschine, der das Nachmischen von Asphaltmaterialien erleichtert.

DE 299 11 151 U1 betrifft einen Straßenfertiger zum mehrlagigen Einbauen einer Straßendecke, wobei der Straßenfertiger ein Anbaumodul aufweist, das in mehreren, zum Abnehmen des Anbaumoduls lösbaren Verbindungseinrichtungen auf dem Straßenfertiger abgestützt und festgelegt ist.

### Aufgabe

Ausgehend von dem bekannten Stand der Technik besteht die zu lösende technische Aufgabe darin, eine Straßenbaumaschine anzugeben, die die oben genannten Nachteile beseitigt oder zumindest reduziert. Im Idealfall soll eine Reichweite oder Einsatzdauer der Straßenbaumaschine erhöht werden.

### Lösung

Diese Aufgabe wird erfindungsgemäß durch eine Straßenbaumaschine gemäß dem Anspruch 1, ein Verfahren zum Austauschen eines Materialbunkereinsatzes mit einem sekundären Speicher an einer Straßenbaumaschine gemäß dem Anspruch 14 oder ein Verfahren zum Betreiben einer Straßenbaumaschine gemäß dem Anspruch 15 gelöst. Vorteilhafte Weiterbildungen der Erfindung sind in den Unteransprüchen erfasst.

Gemäß einem Aspekt der Erfindung wird eine Straßenbaumaschine bereitgestellt. Die Straßenbaumaschine umfasst ein Fahrwerk zum Bewegen der Straßenbaumaschine, einen Primärantrieb zum Antreiben des Fahrwerks, einen primären Speicher zum Versorgen des Primärantriebs mit elektrischer Energie oder einem Energiemittel, einen Materialbunker und einen Materialbunkereinsatz zur Aufnahme von Einbaumaterial. Der Materialbunkereinsatz ist an dem Materialbunker lösbar montiert. Der Materialbunkereinsatz weist mindestens einen sekundären Speicher zum Antreiben des Fahrwerks und/oder zum Versorgen des Primärantriebs mit elektrischer Energie oder dem Energiemittel auf. Dadurch kann eine Verlängerung der Einsatzzeit und Reichweite der, insbesondere selbstfahrenden, Straßenbaumaschine erreicht werden. Es kann vermieden werden, einen Straßenbaubetrieb, insbesondere das Herstellen einer Einbauschicht aus dem Einbaumaterial, zu stoppen, wenn der Straßenbaumaschine Energie oder Energiemittel ausgeht. Dies kann im Idealfall eine Einbauqualität der Einbauschicht verbessern oder zumindest eine nahezu gleichbleibende Einbauqualität während der Herstellung der Einbauschicht sicherstellen. Da Einbauaggregate der Straßenbaumaschine, wie Bohle und Materialförderer, nach einer Unterbrechung wieder aufgewärmt werden müssen, kann die Erfindung optional eine Energieeffizienz der Straßenbaumaschine erhöhen.

Das Fahrwerk kann ein Rad- oder Raupenfahrwerk sein. Das Radfahrwerk kann mehrere angetriebene Räder aufweisen, mittels der die Straßenbaumaschine bewegbar ist. Das Raupenfahrwerk kann zumindest eine angetriebene Kette aufweisen, mittels der die Straßenbaumaschine bewegbar ist.

Der Primärantrieb zum Antreiben des Fahrwerks kann an jeder beliebigen Stelle der Straßenbaumaschine, vorzugsweise in der Nähe des Fahrwerks, insbesondere lösbar, montiert sein. Der Primärantrieb kann dazu ausgebildet sein, das Fahrwerk derart anzutreiben, dass das Fahrwerk die Straßenbaumaschine in einer Fahrtrichtung bewegt. Zum Antreiben des Fahrwerks können der Primärantrieb und das Fahrwerk mechanisch miteinander verbunden sein.

Der primäre Speicher kann, vorzugsweise lösbar, an jeder beliebigen Stelle der Straßenbaumaschine, vorzugsweise in der Nähe des Primärantriebs, insbesondere lösbar, montierbar sein. Der primäre Speicher kann zum Speichern von elektrischer Energie oder einem Energiemittel geeignet sein. Der primäre Speicher kann mit dem Primärantrieb mechanisch und/oder elektrisch verbunden sein, um den Primärantrieb mit elektrischer Energie oder dem Energiemittel zu versorgen. Der primäre Speicher kann eine, insbesondere wieder aufladbare, Batterie, zum Beispiel ein Akkumulator (Akku), sein. Optional kann der primäre Speicher ein Tank zum Aufnehmen des Energiemittels, zum Beispiel fossilem oder fossilfreiem Kraftstoff, sein.

Das Fahrwerk, der Primärantrieb, ein nachfolgend beschriebener Sekundärantrieb, der primäre Speicher und/oder der sekundäre Speicher können kommunikativ verbunden sein.

Die Straßenbaumaschine kann ferner ein Steuerungssystem aufweisen. Das Steuerungssystem kann kommunikativ mit dem Fahrwerk, dem Primärantrieb, dem Sekundärantrieb, dem primären Speicher und/oder dem sekundären Speicher verbunden sein. Das Steuerungssystem kann dazu konfiguriert sein, einen Antrieb und eine Bewegung der Straßenbaumaschine zu steuern und zu überwachen. Das Steuerungssystem kann zum Beispiel dazu konfiguriert sein, einen Ladezustand bzw. Füllstand des primären Speichers und/oder des sekundären Speichers der Straßenbaumaschine zu überwachen. Das Steuerungssystem kann ferner dazu konfiguriert sein, ein Übertragen von elektrischer Energie oder dem Energiemittel von dem primären Speicher und/oder dem sekundären Speicher an den Primärantrieb und/oder den sekundären Antrieb der Straßenbaumaschine zu steuern und zu überwachen, um die Straßenbaumaschine anzutreiben.

Der Materialbunkereinsatz kann an dem Materialbunker mittels einer Befestigungsvorrichtung lösbar montiert sein. Die Befestigungsvorrichtung kann zum Beispiel eine Schraub- oder Klemmvorrichtung sein. Dies kann ein einfaches Befestigen, Lösen und Austauschen des Materialbunkereinsatzes, zum Beispiel zu Wartungs- oder Reinigungszwecken, ermöglichen. Dies kann insbesondere ein besonders einfaches Austauschen des sekundären Speichers ermöglichen, zum Beispiel um einen leeren sekundären Speicher gegen einen gefüllten sekundären Speicher auszutauschen. Optional kann ein Transport des Materialbunkereinsatzes, zum Beispiel mit einem Lastkraftwagen, erleichtert werden, da der Materialbunkereinsatz separat von dem Materialbunker transportiert werden kann.

Vorzugsweise ist der Primärantrieb ein Elektromotor, insbesondere mit einer Brennstoffzelle, oder ein Verbrennungsmotor. Der Primärantrieb kann von Art, Ort und/oder Dauer des Einsatzzwecks der Straßenbaumaschine abhängig sein. Mit einem Elektromotor, insbesondere mit einer Brennstoffzelle, kann die Straßenbaumaschine betrieben werden, ohne direkt Schadstoffe auszustoßen. Im Idealfall kann die Straßenbaumaschine geräuscharm betrieben werden. Dies kann insbesondere von Vorteil sein, wenn die Straßenbaumaschine nur ein begrenztes Maß an Geräuschen oder Schadstoffen emittieren soll, zum Beispiel, wenn sie in oder in der Nähe einer Ortschaft betrieben werden soll. Ein Verbrennungsmotor kann einen im Vergleich zu einer mit einem Elektromotor betriebenen Straßenbaumaschine relativ günstigen Betrieb der Straßenbaumaschine mit hoher Reichweite ermöglichen. Dies kann insbesondere von Vorteil sein, wenn es keine Anforderungen an Geräusch- oder Schadstoffbegrenzungen gibt oder wenn die Straßenbaumaschine über weite Strecken ohne Unterbrechung betrieben werden soll.

Der sekundäre Speicher kann, vorzugsweise lösbar, an jeder beliebigen Stelle des Materialbunkereinsatzes montierbar sein. Der sekundäre Speicher kann mit dem Primärantrieb mechanisch und/oder elektrisch verbunden sein, um den Primärantrieb mit elektrischer Energie oder Energiemittel zu versorgen.

Vorzugsweise umfasst der sekundäre Speicher eine Zusatzbatterie, insbesondere mit einem Batteriemanagementsystem, zum Speichern von elektrischer Energie für den Primärantrieb. Dadurch kann der Primärantrieb, insbesondere der Elektromotor, einfach mit elektrischer Energie versorgt werden. Die Zusatzbatterie kann insbesondere wieder aufladbar sein. Zum Beispiel kann die Batterie ein Zusatzakkumulator sein. Die Zusatzbatterie kann mit dem Primärantrieb elektrisch verbunden sein, um den Primärantrieb mit elektrischer Energie zu versorgen. Optional kann die Zusatzbatterie mit dem Sekundärantrieb elektrisch verbunden sein, um den Sekundärantrieb mit elektrischer Energie zu versorgen.

Vorzugsweise umfasst der sekundäre Speicher einen Zusatztank zum Speichern von, insbesondere flüssigem oder gasförmigem, Energiemittel für den Primärantrieb. Der Zusatztank kann mit dem Primärantrieb mechanisch verbunden sein, um den Primärantrieb mit dem Energiemittel zu versorgen. Optional kann der Zusatztank mit dem Sekundärantrieb mechanisch verbunden sein, um den Sekundärantrieb mit dem Energiemittel zu versorgen.

Vorzugsweise ist das Energiemittel Wasserstoff und/oder Ammoniak und/oder fossiler Kraftstoff und/oder ein synthetischer Kraftstoff. Dadurch kann die Straßenbaumaschine kostengünstig mit konventionellem Energiemittel versorgt werden. Das Energiemittel kann von der Art des Primärantriebs und/oder des Sekundärantriebs abhängig sein.

Vorzugsweise ist der Zusatztank für eine Druckwasserstoffspeicherung oder eine Speicherung von chemisch gebundenem Wasserstoff, insbesondere gebunden mittels LOHC oder Ammoniak, ausgebildet. Optional kann der sekundäre Speicher einen Elektrolyseur zum Freisetzen von, insbesondere als LOHC oder Ammoniak, gebundenem Wasserstoff umfassen.

Vorzugsweise weist der sekundäre Speicher einen Sekundärantrieb zum Antreiben des Fahrwerks der Straßenbaumaschine auf. Dadurch kann die Straßenbaumaschine wahlweise mit dem Primärantrieb und/oder mit dem Sekundärantrieb betrieben werden. Das heißt, das Fahrwerk kann mittels zumindest einem von dem Sekundärantrieb und dem Primärantrieb angetrieben werden. Der Sekundärantrieb kann beispielsweise ein Elektromotor oder ein Verbrennungsmotor, insbesondere mit einem Generator zum Umwandeln mechanischer Energie in elektrische Energie, sein. Der Sekundärantrieb kann an jeder beliebigen Stelle des sekundären Speichers montierbar sein. Indem neben dem Primärantrieb ein Sekundärantrieb vorgesehen ist, kann eine Ausfallsicherheit der Straßenbaumaschine erhöht werden. Zum Beispiel kann der Sekundärantrieb das Fahrwerk der Straßenbaumaschine antreiben, wenn ein Betrieb mittels des Primärantriebs nicht möglich ist, dieser zum Beispiel defekt ist. Optional kann der Sekundärantrieb zusätzlich zu dem Primärantrieb das Fahrwerk antreiben, beispielsweise wenn eine Antriebskraft des Primärantriebs für die Bewegung der Straßenbaumaschine nicht ausreicht. Dies ermöglicht einen zuverlässigen Betrieb der Straßenbaumaschine. Optional kann der Sekundärantrieb mit dem primären Speicher elektrisch verbunden sein. Zum Beispiel kann der Sekundärantrieb ein Verbrennungsmotor mit einem Generator und der sekundäre Speicher ein Energiemitteltank sein. Der Verbrennungsmotor erzeugt mittels des vom sekundären Speicher bereitgestellten Energiemittels mechanische Energie. Der Generator wandelt die mechanische Energie in elektrische Energie um und leitet diese an den primären Speicher in Form einer wieder aufladbaren Batterie weiter, der dann die Straßenbaumaschine mit elektrischer Energie versorgt.

Vorzugsweise weist der Materialbunkereinsatz eine Bodenöffnung und mehrere daran angrenzende Seitenwände auf, wobei mindestens eine Seitenwand bezüglich der Bodenöffnung, insbesondere einer Bodenöffnungsfläche, derart geneigt ist, dass eine Oberkante der geneigten Seitenwand, insbesondere in einer Draufsicht, außerhalb der Bodenöffnung, insbesondere der Bodenöffnungsfläche, liegt, wobei der sekundäre Speicher unterhalb der geneigten Seitenwand angeordnet ist. Die Seitenwand kann eine, insbesondere der Oberkante gegenüberliegende, Unterkante aufweisen. Die Bodenöffnung, insbesondere die Bodenöffnungsfläche, kann durch die Unterkanten der Seitenwände gebildet werden. Zwischen den Oberkanten kann eine obere Öffnungsfläche aufgespannt sein. Der Materialbunkereinsatz kann zum Beispiel trichterförmig ausgebildet sein, insbesondere derart, dass die obere Öffnungsfläche größer als die Bodenöffnungsfläche ist. Dies kann eine einfache und gleichmäßige Befüllung des Materialbunkereinsatzes mit Einbaumaterial ermöglichen. Indem der sekundäre Speicher unterhalb der geneigten Seitenwand angeordnet ist, kann insbesondere ein im Materialbunker bereits vorhandener Bauraum genutzt werden. Es kann eine besonders kompakte Bauweise der Straßenbaumaschine realisiert werden. Insbesondere in der Draufsicht, kann sich die Oberkante der geneigten Seitenwand, insbesondere nahezu, parallel zu einer Längserstreckung der Straßenbaumaschine, insbesondere in der Fahrtrichtung, erstrecken. Die geneigte Seitenwand kann zum Beispiel eine seitliche Seitenwand des Materialbunkereinsatzes sein. Der sekundäre Speicher kann unterhalb der seitlichen Seitenwand angeordnet sein. Optional kann sich die Oberkante der geneigten Seitenwand, insbesondere in der Draufsicht, insbesondere nahezu, orthogonal zur Längserstreckung der Straßenbaumaschine, insbesondere in der Fahrtrichtung, erstrecken. Die geneigte Seitenwand kann zum Beispiel eine Vorderwand oder eine Rückwand des Materialbunkereinsatzes sein. Der sekundäre Speicher kann unterhalb der Vorderwand oder der Rückwand angeordnet sein.

Vorzugsweise beträgt ein Winkel zwischen der Seitenwand und einer Ebene der Bodenöffnung, insbesondere der Bodenöffnungsfläche, mindestens 100°, vorzugsweise mindestens 110°, und/oder höchstens 135°, vorzugsweise höchstens 125°. Grundsätzlich kann der Winkel jede geeignete Größe haben. Die Winkelgröße kann von dem Materialbunker, dem Materialbunkereinsatz und/oder dem sekundären Speicher abhängig sein. Die Winkelgröße kann derart gewählt sein, dass das im Materialbunkereinsatz befindliche Einbaumaterial einfach und insbesondere gleichmäßig auf eine unterhalb des Materialbunkereinsatzes angeordnete Fördereinheit der Straßenbaumaschine rutschen kann.

Vorzugsweise bildet die geneigte Seitenwand, insbesondere in der Draufsicht auf den Materialbunkereinsatz, eine Abdeckung für den sekundären Speicher. Dadurch kann der sekundäre Speicher vor äußeren Einflüssen, insbesondere Beschädigungen, geschützt werden. Dies kann eine Lebensdauer des sekundären Speichers erhöhen und im Idealfall Reparatur-/Wartungskosten reduzieren. Die geneigte Seitenwand kann den sekundären Speicher, insbesondere in der Draufsicht, zumindest teilweise, vorzugsweise vollständig, abdecken.

Vorzugsweise weist der Materialbunkereinsatz eine Wärmeisolierung auf. Dadurch kann vermieden werden, dass sich eine Temperatur des im Materialbunkereinsatz befindlichen Einbaumaterials stark ändert, insbesondere, dass das Einbaumaterial abkühlt. Im Idealfall kann sichergestellt werden, dass das Einbaumaterial in dem Materialbunkereinsatz eine Mindesttemperatur, zum Beispiel mindestens etwa 80°C, aufweist. Dies kann eine weitere Verarbeitung des Einbaumaterials verbessern. Im Idealfall kann vermieden werden, dass sich das Einbaumaterial in dem Materialbunkereinsatz verfestigt. Das warme Einbaumaterial kann einen Teil seiner Wärme an den Materialbunkereinsatz abgeben und diesen erwärmen. Durch die Wärmeisolierung kann erreicht werden, dass die von dem Materialbunkereinsatz an seine Umgebung und insbesondere den sekundären Speicher abgegebene Wärme reduziert wird. Dadurch kann sichergestellt werden, dass sich der sekundäre Speicher nicht zu stark durch die vom Materialbunkereinsatz abgegebene Wärme erwärmt und im schlechtesten Fall zu warm für einen Betrieb wird. Es kann insbesondere ein Thermomanagementsystem des sekundären Speichers, der dessen Temperatur für dessen Betrieb steuert, kleiner, insbesondere leistungsschwächer, dimensioniert werden. Optional kann durch die Wärmeisolierung eine Heizvorrichtung zum Heizen einer Einbaubohle und/oder eines Förderbands kleiner, insbesondere leistungsschwächer, dimensioniert werden. Wenn das Einbaumaterial eine Mindesttemperatur nicht unterschreitet, kann erreicht werden, dass die Heizvorrichtung weniger Energie aufwenden muss, um das Einbaumaterial für die weitere Verarbeitung weiter warmzuhalten. Die Wärmeisolierung kann zumindest abschnittsweise oder vollständig an dem Materialbunkereinsatz, insbesondere an einer Außenseite seiner Seitenwände, angebracht sein. Die Wärmeisolierung kann zum Beispiel eine Isoliermatte oder -folie sein, die, insbesondere lösbar, an dem Materialbunkereinsatz befestigbar ist. Optional kann die Wärmeisolierung, insbesondere nicht lösbar, auf den Materialbunkereinsatz als Isolierfilm aufsprühbar oder aufgesprüht sein.

Der Materialbunkereinsatz kann mindestens eine Aufnahmevorrichtung zum Hineinheben des Materialbunkereinsatzes in und/oder zum Herausheben des Materialbunkereinsatzes aus dem Materialbunker aufweisen. Dies kann eine einfache Montage und Demontage des Materialbunkereinsatzes an dem Materialbunker ermöglichen. Im Idealfall kann dies einen schnellen und einfachen Wechsel des Materialbunkereinsatzes, zum Beispiel zu Wartungs- oder Reinigungszwecken, ermöglichen. Zum Beispiel kann die Aufnahmevorrichtung als Öse ausgebildet sein, in die eine Hebevorrichtung, zum Beispiel ein Haken eines Krans, zum Bewegen des Materialbunkereinsatzes greifen kann.

Vorzugsweise ist der sekundäre Speicher über eine Schnittstelle zum Übertragen von elektrischer Energie oder dem Energiemittel mit der Straßenbaumaschine, insbesondere dem Primärantrieb und/oder dem primären Speicher, verbindbar. Dies kann eine einfache Übertragung von elektrischer Energie oder dem Energiemittel ermöglichen. Durch die Schnittstelle kann die Straßenbaumaschine an den sekundären Speicher andocken oder umgekehrt. Durch die Schnittstelle kann der sekundäre Speicher an der Straßenbaumaschine mechanisch oder elektrisch angeschlossen werden.

Vorzugsweise ist die Straßenbaumaschine ein Straßenfertiger zum Herstellen einer Einbauschicht aus dem Einbaumaterial oder ein Beschickerfahrzeug zum Beliefern des Straßenfertigers mit dem Einbaumaterial. Dadurch kann eine Verlängerung der Einsatzzeit und der Reichweite des Straßenfertigers oder des Beschickerfahrzeugs erreicht werden. Es kann vermieden werden, dass der Straßenfertiger oder das Beschickerfahrzeug vor Fertigstellung der Einbauschicht gestoppt und damit der Einbauprozess unterbrochen werden muss. Dies kann insbesondere eine Einbauqualität der Einbauschicht verbessern oder zumindest eine nahezu gleichbleibende Einbauqualität während der Herstellung der Einbauschicht sicherstellen.

Der Primärantrieb und/oder der sekundäre Speicher kann mindestens einen, insbesondere elektrischen, Verbraucher der Straßenbaumaschine mit, insbesondere elektrischer, Energie versorgen. Dadurch können das Fahrwerk und die Verbraucher der Straßenbaumaschine gemeinsam angetrieben werden. Es kann das Erfordernis eines separaten Antriebs oder Energiespeichers für die Verbraucher entfallen. Dies kann zu einer besonders kompakten und leichten Bauweise der Straßenbaumaschine beitragen. Grundsätzlich kann der Verbraucher ein beliebiger, zur Verwendung der Straßenbaumaschine erforderlicher, Verbraucher sein. Der Verbraucher kann an dem Straßenfertiger beispielsweise eine elektrisch betriebene Beleuchtung, eine elektrisch betriebene Heizvorrichtung, ein elektrisch betriebenes Elektro-Hydraulikaggregat, eine elektrisch betriebene Längsfördervorrichtung und/oder eine elektrisch betriebene Querfördervorrichtung sein. Der Verbraucher kann an dem Beschickerfahrzeug beispielsweise eine elektrisch betriebene Beleuchtung, eine elektrisch betriebene Fördereinrichtung für Einbaugut und/oder eine elektrisch betriebene Heizvorrichtung des Beschickerfahrzeugs sein. Der Primärantrieb und/oder der sekundäre Speicher kann mit nur einem oder mit mehreren Verbrauchern verbunden sein. Optional kann der Verbraucher mit wenigstens einem von dem Primärantrieb und dem sekundären Speicher verbunden sein.

Gemäß einem weiteren Aspekt der Erfindung wird ein Verfahren zum Austauschen eines Materialbunkereinsatzes mit einem sekundären Speicher an einer Straßenbaumaschine bereitgestellt. Das Verfahren umfasst die Schritte: Lösen einer ersten Befestigungsvorrichtung eines ersten Materialbunkereinsatzes von einem Materialbunker der Straßenbaumaschine; Entnehmen des ersten Materialbunkereinsatzes mit einem ersten sekundären Speicher aus dem Materialbunker; Einbringen eines zweiten Materialbunkereinsatzes mit einem zweiten sekundären Speicher in den Materialbunker; und Befestigen des zweiten Materialbunkereinsatzes am Materialbunker mittels einer zweiten Befestigungsvorrichtung. Der erste Materialbunkereinsatz und der zweite Materialbunkereinsatz können baugleich oder voneinander abweichend aufgebaut sein. Der erste sekundäre Speicher und der zweite sekundäre Speicher können baugleich oder voneinander abweichend aufgebaut sein. Über eine Schnittstelle ist elektrische Energie oder ein Energiemittel zwischen dem sekundären Speicher und der Straßenbaumaschine übertragbar, wobei vor dem Entnehmen des ersten Materialbunkereinsatzes aus dem Materialbunker eine Verbindung des ersten sekundären Speichers mit der Straßenbaumaschine über eine erste Schnittstelle gelöst wird und/oder wobei nach dem Befestigen des zweiten Materialbunkereinsatzes am Materialbunker eine Verbindung des zweiten sekundären Speichers mit der Straßenbaumaschine über eine zweite Schnittstelle hergestellt wird.

Gemäß einem weiteren Aspekt der Erfindung wird ein Verfahren zum Betreiben einer Straßenbaumaschine bereitgestellt. Das Verfahren umfasst die Schritte: Bereitstellen von elektrischer Energie oder einem Energiemittel durch einen primären Speicher der Straßenbaumaschine; Versorgen eines Primärantriebs der Straßenbaumaschine mit elektrischer Energie oder dem Energiemittel durch den primären Speicher; Antreiben eines Fahrwerks der Straßenbaumaschine durch den Primärantrieb; und Bewegen der Straßenbaumaschine durch das Fahrwerk. Mindestens ein sekundärer Speicher versorgt den Primärantrieb mit elektrischer Energie oder Energiemittel und/oder treibt das Fahrwerk an, wobei der sekundäre Speicher an einem Materialbunkereinsatz zur Aufnahme von Einbaumaterial montiert wird. Der Materialbunkereinsatz wird lösbar an einem Materialbunker der Straßenbaumaschine montiert.

Der sekundäre Speicher kann den Primärantrieb mit elektrischer Energie oder dem Energiemittel versorgen, wenn eine Versorgung des Primärantriebs durch den primären Speicher mit elektrischer Energie oder dem Energiemittel beendet ist. Ist zum Beispiel ein Ladezustand des primären Speichers für die Herstellung einer Einbauschicht nicht ausreichend, kann der sekundäre Speicher anstelle des primären Speichers den Primärantrieb mit Energie oder dem Energiemittel versorgen, wenn der primäre Speicher einen minimalen Ladezustand erreicht.

Der sekundäre Speicher, insbesondere ein Sekundärantrieb des sekundären Speichers, kann das Fahrwerk antreiben, wenn ein Antrieb des Fahrwerks durch den Primärantrieb beendet ist. Zum Beispiel kann der Sekundärantrieb das Fahrwerk der Straßenbaumaschine antreiben, wenn ein Betrieb mittels des Primärantriebs nicht möglich ist, dieser zum Beispiel defekt ist. Beispielsweise kann ein Steuerungssystem der Straßenbaumaschine die Funktionsweise des Primärantriebs überwachen und den Sekundärantrieb dazu veranlassen, das Fahrwerk anzutreiben, wenn der Betrieb mittels des Primärantriebs nicht möglich ist. Optional kann ein Bediener der Straßenbaumaschine manuell den Betrieb des Primärantriebs stoppen und den Betrieb des Sekundärantriebs veranlassen.

Die zu einem der Aspekte der Erfindung (Straßenbaumaschine oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine perspektivische Ansicht einer Straßenbaumaschine in Form eines Straßenfertigers gemäß einer Ausführungsform;
- Figur 2: eine perspektivische Ansicht eines Materialbunkereinsatzes für den Straßenfertiger gemäß einer Ausführungsform;
- Figur 3: eine schematische Vorderansicht des Straßenfertigers von vorne;
- Figur 4: eine schematische Ansicht des Straßenfertigers von oben;
- Figur 5: eine perspektivische Ansicht einer Straßenbaumaschine in Form eines Beschickerfahrzeugs gemäß einer Ausführungsform; und
- Figur 6: eine perspektivische Ansicht des Materialbunkereinsatzes für das Beschickerfahrzeug gemäß einer Ausführungsform.

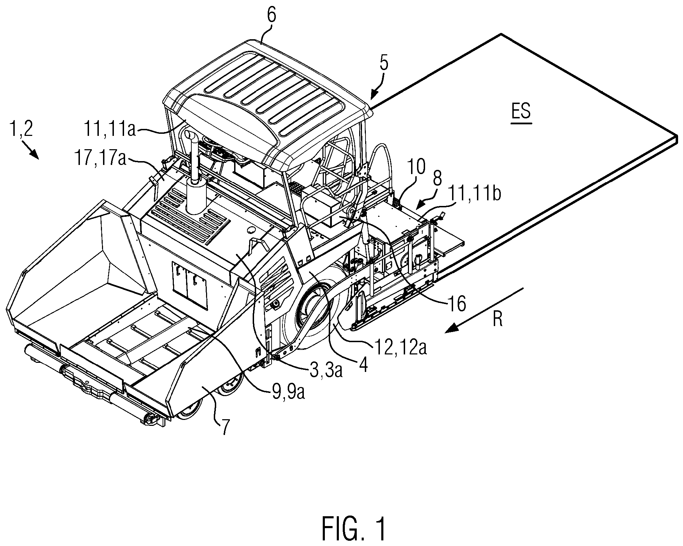

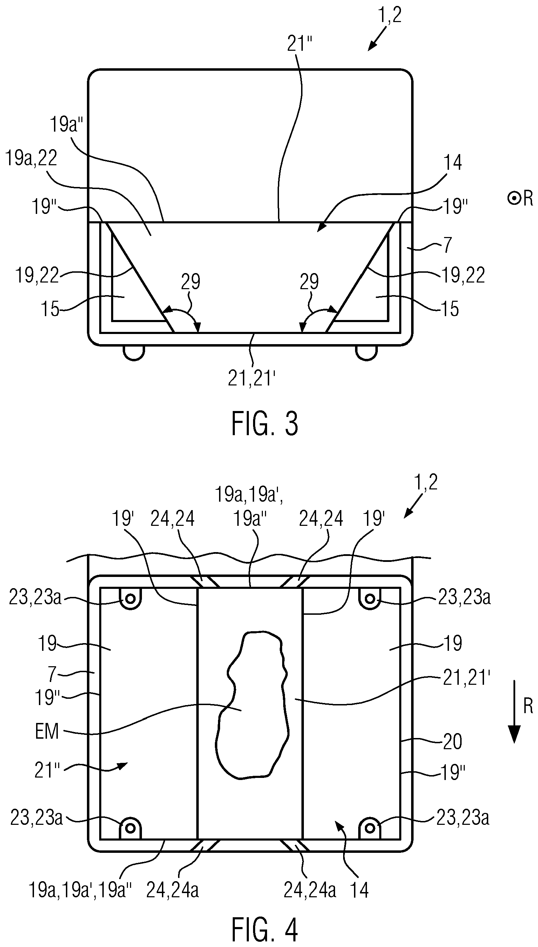

Die Figur 1 zeigt eine perspektivische Ansicht einer Straßenbaumaschine 1 in Form eines Straßenfertigers 2 gemäß einer Ausführungsform. Der Straßenfertiger 2 ist zur Herstellung einer Einbauschicht ES aus Einbaumaterial EM (Asphaltmischgut) (siehe Figur 4) ausgebildet. Der Straßenfertiger 2 ist selbstfahrend, in einer Fahrtrichtung R.

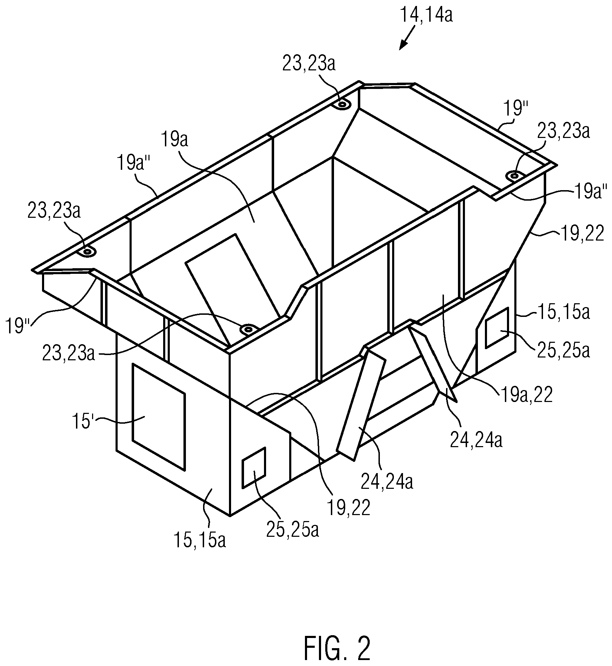

Der Straßenfertiger 2 weist des Weiteren ein Chassis 4, einen Bedienstand 5 für einen Bediener des Straßenfertigers 2, ein Fahrerdach 6 sowie einen Materialbunker 7 auf. An dem Materialbunker 7 ist ein Materialbunkereinsatz 14 zur Aufnahme des Einbaumaterials EM montiert (siehe Figuren 2 bis 4). Ferner sind an dem Chassis 4 eine höhenverstellbar gelagerte und in Fahrtrichtung R geschleppte Einbaubohle 8 und eine Fördereinheit 9 umfassend ein Förderband 9a angebracht, um das Einbaumaterial EM aus dem Materialbunkereinsatz 14 des Straßenfertigers 2 der Einbaubohle 8 mittels einer Querverteilervorrichtung 10 der Straßenbaumaschine 1 zur Verfügung zu stellen.

Figur 1 zeigt ferner beispielhaft zwei elektrische Verbraucher 11 des Straßenfertigers 2. Ein erster elektrischer Verbraucher 11a ist eine Beleuchtung zum Beleuchten der Umgebung oder des Bedienstands 5. Ein zweiter elektrischer Verbraucher 11b ist eine Heizvorrichtung zum Heizen der Einbaubohle 8. Die Einbaubohle 8 umfasst Komponenten wie z.B. Verdichtungsaggregate (Glättbleche, Tamper und Pressleisten (nicht gezeigt). Durch die Einwirkung des Eigengewichts des Verdichtungsaggregats wird das Einbaumaterial EM verdichtet. Um zu verhindern, dass das Einbaumaterial EM an den Komponenten der Einbaubohle 8 festklebt, können in diese Komponenten Heizeinrichtungen (nicht gezeigt) integriert werden, in der Regel elektrische Heizeinrichtungen.

Um sich in der Richtung R fortzubewegen, weist der Straßenfertiger 2 ein Radfahrwerk 12 mit zwei angetriebenen Rädern 12a auf. Der Straßenfertiger 2 weist ferner einen Primärantrieb 3 in Form eines Elektromotors 3a auf, um das Radfahrwerk 12 anzutreiben. Mit dem Elektromotor 3a kann der Straßenfertiger 2 betrieben werden, ohne direkt Schadstoffe auszustoßen. Im Idealfall kann der Straßenfertiger 2 geräuscharm betrieben werden. Dies ist insbesondere von Vorteil, wenn der Straßenfertiger 2 nur ein begrenztes Maß an Geräuschen oder Schadstoffen emittieren darf, zum Beispiel, wenn er in oder in der Nähe einer Ortschaft betrieben werden soll. Der Elektromotor 3a ist dazu ausgebildet, das Radfahrwerk 12 derart anzutreiben, dass das Radfahrwerk 12 den Straßenfertiger 2 in der Fahrtrichtung R bewegt. Dazu sind der Elektromotor 3a und das Radfahrwerk 12 mechanisch miteinander verbunden.

Der Elektromotor 3a ist ferner mit einem primären Speicher 17 elektrisch verbunden, um von diesem mit elektrischer Energie versorgt zu werden. Dazu ist der primäre Speicher 17 als aufladbarer Akkumulator 17a ausgebildet, um elektrische Energie zu speichern und an den Elektromotor 3a abzugeben. Der Akkumulator 17a ist lösbar mittels einer Schraubverbindung an dem Straßenfertiger 2 in der Nähe des Elektromotors 3a montiert.

Die Figuren 2 bis 4 zeigen Details zum Materialbunkereinsatz 14. Der Materialbunkereinsatz 14 dient der Aufnahme des Einbaumaterials EM und ist an dem Materialbunker 7 lösbar montiert. Dazu sind z.B. vier Befestigungsvorrichtungen 24 in Form von Schraubverbindungen vorgesehen, die an den Außenseiten von Seitenwänden 19a des Materialbunkereinsatzes 14 angeordnet sind und den Materialbunkereinsatz 14 mit dem Materialbunker 7 verbinden (siehe Figur 4). Dies ermöglicht ein einfaches Austauschen des Materialbunkereinsatzes 14 zum Beispiel zu Wartungs- oder Reinigungszwecken.

Wie Figur 2 zeigt, weist der Materialbunkereinsatz 14 ferner eine Wärmeisolierung 22 auf. Diese ist vollständig an den Außenseiten aller Seitenwände 19, 19a des Materialbunkereinsatzes 14 in Form einer Isolierfolie aufgeklebt. Dadurch wird vermieden, dass sich eine Temperatur des im Materialbunkereinsatz 14 befindlichen Einbaumaterials EM stark ändert, insbesondere abkühlt und sich in dem Materialbunkereinsatz 14 verfestigt.

Die Figuren 3 und 4 zeigen eine schematische Vorderansicht und Draufsicht des Straßenfertigers 2, insbesondere des Materialbunkereinsatzes 14. Der Materialbunkereinsatz 14 weist eine Bodenöffnung 21 auf. Das im Materialbunkereinsatz 14 befindliche Einbaumaterial EM fällt durch die Bodenöffnung 21auf das Förderband 9a und wird von diesem an die Einbaubohle 8 weitergeleitet.

Die Bodenöffnung 21, insbesondere eine Bodenöffnungsfläche 21', wird durch die vier Seitenwände 19, 19a, insbesondere deren Unterkanten 19', 19a', gebildet. Die Seitenwände 19, 19a weisen ferner Oberkanten 19", 19a" auf, die den Unterkanten 19', 19a' gegenüberliegen und eine obere Öffnungsfläche 21" aufspannen. Die obere Öffnungsfläche 21" ist, insbesondere in der Draufsicht, größer als die Bodenöffnungsfläche 21'. Die gegenüberliegenden Seitenwände 19 sind bezüglich der Bodenöffnung 21 derart geneigt, dass ihre Oberkanten 19" in der Draufsicht auf den Materialbunkereinsatz 14 außerhalb der Bodenöffnung 21 liegt. Ein Winkel 29 zwischen der Seitenwand 19 und einer Ebene der Bodenöffnung 21, insbesondere der Bodenöffnungsfläche 21', beträgt etwa 130°. Somit ist der Materialbunkereinsatz 14 trichterförmig ausgebildet. Dies ermöglicht eine einfache und gleichmäßige Befüllung des Materialbunkereinsatzes 14 mit Einbaumaterial EM.

Um die Reichweite und Einsatzzeit des Straßenfertigers 2 zu erhöhen, verfügt der Straßenfertiger 2 ferner über einen oder zwei sekundäre Speicher 15, die im Wesentlichen gleich aufgebaut sind (siehe Figur 2). Die sekundären Speicher 15 umfassen je einen Zusatzakkumulator 15' zum Speichern von elektrischer Energie. Die sekundären Speicher 15 sind je mit dem Elektromotor 3a elektrisch über eine Schnittstelle 25 verbunden, um die elektrische Energie an den Elektromotor 3a zu übertragen. Dadurch ist es möglich, dass der Elektromotor 3a zusätzlich oder optional zur Versorgung über den primären Speicher 17 auch über die sekundären Speicher 15 mit elektrischer Energie versorgt wird. Dies erhöht eine Ausfallsicherheit des Straßenfertigers 2. Ist zum Beispiel ein Ladezustand des primären Speichers 17 für die Herstellung einer Einbauschicht ES nicht ausreichend, ist es möglich, den Elektromotor 3a über die sekundären Speicher 15 mit Energie zu versorgen. Dadurch wird vermieden, dass der Straßenfertiger 2 vor Fertigstellung der Einbauschicht ES gestoppt und damit der Einbauprozess unterbrochen werden muss. Dies verbessert insbesondere eine Einbauqualität der Einbauschicht ES.

Die sekundären Speicher 15 sind mittels einer Schraubverbindung lösbar an den Außenseiten der geneigten Seitenwände 19 des Materialbunkereinsatzes 14, insbesondere an der Wärmeisolierung 22, montiert. Das heißt, die sekundären Speicher 15 sind je unterhalb der geneigten Seitenwände 19 angeordnet. Dadurch wird vorhandener Bauraum genutzt und eine besonders kompakte Bauweise des Straßenfertigers 2 ermöglicht.

In der Draufsicht auf den Materialbunkereinsatz 14 bilden die geneigten Seitenwände 19 außerdem eine Abdeckung für die sekundären Speicher 15 (siehe Figuren 3 und 4). Die geneigten Seitenwände 19 decken die sekundären Speicher 15 vollständig ab. Dadurch werden die sekundäre Speicher 15 vor äußeren Einflüssen, insbesondere Beschädigungen, geschützt. Dies erhöht eine Lebensdauer der sekundären Speichers 15 und senkt im Idealfall Reparatur-/Wartungskosten.

Ferner sind der primäre Speicher 17 und der sekundäre Speicher 15 je elektrisch mit den elektrischen Verbrauchern 11 verbunden, um diese mit Energie zu versorgen. Dadurch wird kein separater Energiespeicher für die Verbraucher 11 benötigt. Dies trägt zu einer kompakten und leichten Bauweise bei.

Die Steuerung des Straßenfertigers 2 erfolgt über ein Steuerungssystem 16 (siehe Figur 1). Das Steuerungssystem 16, das Radfahrwerk 12, der Elektromotor 3a, der primäre Speicher 17, der sekundäre Speicher 15 und die Verbraucher 11 sind miteinander kommunikativ verbunden. Das Steuerungssystem 16 überwacht einen Energiebedarf des Straßenfertigers 2. Ferner überwacht das Steuerungssystem 16 einen Ladezustand des primären Speichers 17 und des sekundären Speichers 15. Erkennt das Steuerungssystem 16 zum Beispiel, dass der Ladezustand des primären Speichers 17 für die Herstellung der Einbauschicht ES nicht ausreicht, veranlasst es, dass der Elektromotor 3a zusätzlich über den sekundären Speicher 15 mit Energie versorgt wird. Dadurch wird vermieden, dass der Straßenfertiger 2 vor Fertigstellung der Einbauschicht ES gestoppt und damit der Einbauprozess unterbrochen werden muss.

Die Figuren 2 bis 4 zeigen ferner den Straßenfertiger 2 vor und nach dem Austauschen des am Straßenfertiger 2 montierten ersten Materialbunkereinsatzes 14 durch einen zweiten Materialbunkereinsatz 14a. Der erste Materialbunkereinsatzes 14 und der zweite Materialbunkereinsatz 14a sind im Wesentlichen baugleich. Ebenso sind erste sekundäre Speicher 15 und der zweite sekundäre Speicher 15a im Wesentlichen baugleich. Zum Austausch des ersten Materialbunkereinsatzes 14 wird zunächst eine Verbindung der ersten sekundären Speicher 15 mit dem Straßenfertiger 2 über die ersten Schnittstellen 25 gelöst. Im nächsten Schritt werden die ersten Befestigungsvorrichtungen 24 des ersten Materialbunkereinsatzes 14 vom Materialbunker 7 manuell gelöst. Dies hat den Vorteil, dass keine zusätzlichen Werkzeuge erforderlich sind. Im nächsten Schritt wird der erste Materialbunkereinsatz 14 und damit der erste sekundäre Speicher 15 aus dem Materialbunker 7 entnommen. Um den Materialbunkereinsatz 14 anzuheben, sind an diesem vier Aufnahmevorrichtungen 23 in Form von Ösen an den beiden Seitenwänden 19a angebracht. In die Ösen greift eine Hebevorrichtung, zum Beispiel ein Haken eines Krans, und hebt so den Materialbunkereinsatz 14 aus dem Materialbunker 7 heraus. Dies ermöglicht eine einfache Demontage des Materialbunkereinsatzes 14 vom Materialbunker 7. Im nächsten Schritt wird ein zweiter Materialbunkereinsatz 14a in den Materialbunker 7 eingebracht. Dies erfolgt analog zu der Entnahme des ersten Materialbunkereinsatzes 14 mittels des Krans, der mit dem zweiten Materialbunkereinsatz 14a an vier Aufnahmevorrichtungen 23a in Eingriff kommt. An dem zweiten Materialbunkereinsatz 14a ist ein zweiter sekundärer Speicher 15a montiert, sodass zusammen mit dem zweiten Materialbunkereinsatz 14a der zweite sekundäre Speicher 15a in den Materialbunker 7 eingebracht wird. Im nächsten Schritt wird der zweite Materialbunkereinsatz 14a mittels vier zweiter Befestigungsvorrichtungen 24a an dem Materialbunker 7 befestigt. Im nächsten Schritt wird eine Verbindung der zweiten sekundären Speicher 15a mit dem Straßenfertiger 2 über zweite Schnittstellen 25a hergestellt. Die zweiten sekundären Speicher 15a werden dadurch mit dem Elektromotor 3a mechanisch verbunden, um elektrische Energie an den Elektromotor 3a zu übertragen und dadurch den Straßenfertiger 2 anzutreiben.

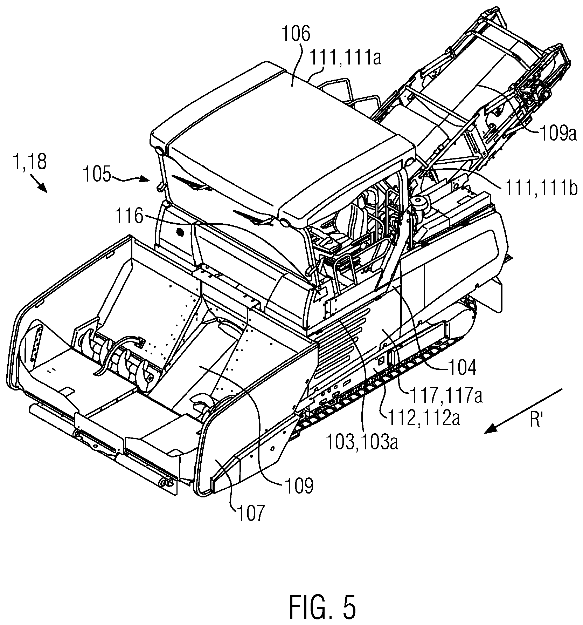

Figur 5 zeigt in perspektivischer Ansicht eine Straßenbaumaschine 1, bei der es sich um ein Beschickerfahrzeug 18 zum Fördern von Einbaumaterial EM zu einem hinterherfahrenden Straßenfertiger 2 handelt. Das Beschickerfahrzeug 18 ist selbstfahrend, in einer Fahrtrichtung R'.

Das Beschickerfahrzeug 18 umfasst ferner ein Chassis 104, einen Bedienstand 105, ein Fahrerdach 106, einen Materialbunker 107 mit einem Materialbunkereinsatz 114 zur Aufnahme eines Einbaumaterials EM sowie eine Fördereinheit 109 umfassend ein Förderband 109a, um das Einbaumaterial EM aus dem Materialbunkereinsatz 114 des Beschickerfahrzeugs 18 in den Materialbunkereinsatz 114 des Straßenfertigers 2 zu transportieren.

Das Beschickerfahrzeug 18 verfügt des Weiteren über zwei elektrische Verbraucher 111. Ein erster elektrischer Verbraucher 111a ist eine Beleuchtung zum Beleuchten der Umgebung oder den Bedienstand 105. Ein zweiter elektrischer Verbraucher 111b ist eine Heizvorrichtung zum Heizen des Förderbands 109a.

Zum Bewegen des Beschickerfahrzeugs 18 ist ein Raupenfahrwerk 112 vorgesehen. Das Raupenfahrwerk 112 weist zwei angetriebene Ketten 112a auf. Das Beschickerfahrzeug 18 weist ferner einen Primärantrieb 103 in Form eines Verbrennungsmotors 103a auf, um das Raupenfahrwerk 112 anzutreiben. Der Verbrennungsmotor 103a ermöglicht einen im Vergleich zu einem Betrieb mit einem Elektromotor relativ günstigen Betrieb des Beschickerfahrzeugs 18 mit hoher Reichweite. Dies ist insbesondere von Vorteil, wenn es keine Anforderungen an Geräusch- oder Schadstoffbegrenzungen gibt oder, wenn das Beschickerfahrzeug 18 über weite Strecken ohne Unterbrechung betrieben werden soll.

Der Verbrennungsmotor 103a ist dazu ausgebildet, das Raupenfahrwerk 112 derart anzutreiben, dass das Raupenfahrwerk 112 das Beschickerfahrzeug 18 in der Fahrtrichtung R' bewegt. Zum Antreiben des Raupenfahrwerks 112 sind der Verbrennungsmotor 103a und das Raupenfahrwerk 112 mechanisch miteinander verbunden. Der Verbrennungsmotor 103a ist ferner mit einem primären Speicher 117 mechanisch verbunden und wird von diesem mit einem Energiemittel in Form von Diesel versorgt. Dazu ist der primäre Speicher 117 als Tank 117a zum Aufnehmen von Diesel ausgebildet. Der primäre Speicher 117 ist lösbar mittels einer Schraubverbindung an dem Beschickerfahrzeug 18 in der Nähe des Verbrennungsmotors 103a montiert.

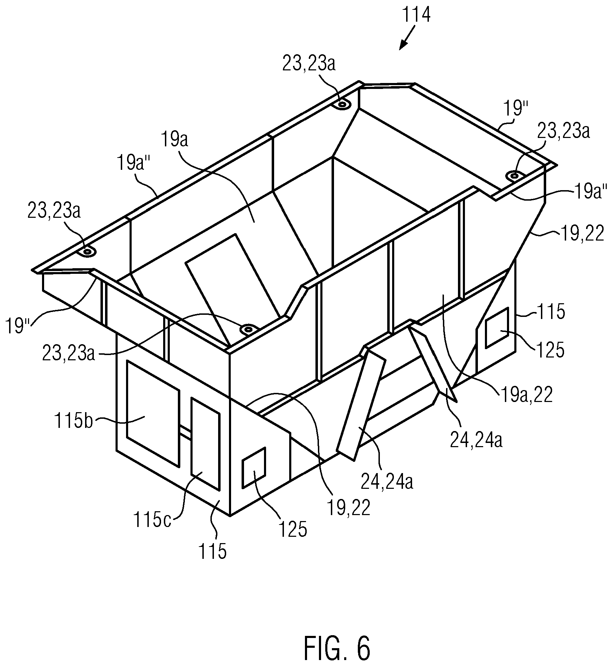

Die Figur 6 zeigt Details zum Materialbunkereinsatz 114. Der Materialbunkereinsatz 114 des Beschickerfahrzeugs 18 ist im Wesentlichen gleich aufgebaut wie der Materialbunkereinsatz 14 des Straßenfertigers 2. Die Elemente des Materialbunkereinsatzes 114, die denen des Materialbunkereinsatzes 14 entsprechen, sind mit denselben Bezugszeichen gekennzeichnet. An dem Materialbunkereinsatz 114 sind ebenso wie am Materialbunkereinsatz 14 je zwei sekundäre Speicher 115 montiert.

Im Gegensatz zu den sekundären Speichern 15 des Straßenfertigers 2 weisen die sekundären Speicher 115 des Beschickerfahrzeugs 18 je einen Zusatztank 115b zum Speichern von Diesel sowie je einen Sekundärantrieb 115c in Form eines Verbrennungsmotors zum Antrieben des Raupenfahrwerks 112 auf. Dazu ist der Sekundärantrieb 115c mit dem Raupenfahrwerks 112 mechanisch über die Schnittstelle 125 verbunden. Ferner ist der Zusatztank 115b mit dem Sekundärantrieb 115c mechanisch verbunden sein, um den Sekundärantrieb 115c mit Diesel zu versorgen.

Die Steuerung des Beschickerfahrzeugs 18 erfolgt über ein Steuerungssystem 116 (siehe Figur 5). Das Steuerungssystem 116, das Raupenfahrwerk 112, der Primärantrieb 103, der primäre Speicher 117, der sekundäre Speicher 115, d.h. die Sekundärantriebe 115c und die Zusatztanks 115b, und die Verbraucher 111 sind miteinander kommunikativ verbunden.

Das Steuerungssystem 116 überwacht einen Energiebedarf des Beschickerfahrzeugs 18. Ferner überwacht das Steuerungssystem 116 einen Füllstand des primären Speichers 117, das heißt des Tanks 117a, und der sekundären Speicher 115, das heißt der Zusatztanks 115b. Erkennt das Steuerungssystem 116 zum Beispiel, dass eine von dem Primärantrieb 103 erzeugbare Energie zu gering für den Betrieb des Beschickerfahrzeugs 18 ist, veranlasst das Steuerungssystem 116, dass das Raupenfahrwerk 112 zusätzlich über die beiden Sekundärantriebe 115c angetrieben wird. Dadurch wird vermieden, dass das Beschickerfahrzeug 18 vor Fertigstellung der Einbauschicht ES gestoppt und damit der Einbauprozess unterbrochen werden muss.

## Patentansprüche

1. Straßenbaumaschine (1) umfassend:
ein Fahrwerk (12, 112) zum Bewegen der Straßenbaumaschine (1),
einen Primärantrieb (3, 103) zum Antreiben des Fahrwerks (12, 112),
einen primären Speicher (17, 117) zum Versorgen des Primärantriebs (3, 103) mit elektrischer Energie oder einem Energiemittel,
einen Materialbunker (7, 107) und
einen Materialbunkereinsatz (14, 114, 14a) zur Aufnahme von Einbaumaterial (EM),
wobei der Materialbunkereinsatz (14, 114, 14a) an dem Materialbunker (7, 107) lösbar montiert ist,
wobei der Materialbunkereinsatz (14, 114, 14a) mindestens einen sekundären Speicher (15, 115, 15a) zum Antreiben des Fahrwerks (12, 112) und/oder zum Versorgen des Primärantriebs (3, 103) mit elektrischer Energie oder dem Energiemittel aufweist.

2. Straßenbaumaschine nach Anspruch 1, wobei der Primärantrieb (3, 103) ein Elektromotor (3a), insbesondere mit einer Brennstoffzelle, oder ein Verbrennungsmotor (103a) ist.

3. Straßenbaumaschine nach Anspruch 1 oder 2, wobei der sekundäre Speicher (15, 115, 15a) eine Zusatzbatterie, insbesondere mit einem Batteriemanagementsystem, zum Speichern von elektrischer Energie für den Primärantrieb (3, 103) umfasst.

4. Straßenbaumaschine nach einem der vorangehenden Ansprüche, wobei das Energiemittel Wasserstoff und/oder Ammoniak und/oder fossiler Kraftstoff und/oder ein synthetischer Kraftstoff ist.

5. Straßenbaumaschine nach einem der vorangehenden Ansprüche, wobei der sekundäre Speicher (15, 115, 15a) einen Zusatztank (115b) zum Speichern von, insbesondere flüssigem oder gasförmigem, Energiemittel für den Primärantrieb (3, 103) umfasst.

6. Straßenbaumaschine nach Anspruch 5, wobei der Zusatztank (115b) für eine Druckwasserstoffspeicherung oder eine Speicherung von chemisch gebundenem Wasserstoff, insbesondere gebunden mittels LOHC oder Ammoniak, ausgebildet ist.

7. Straßenbaumaschine nach einem der vorangehenden Ansprüche, wobei der sekundäre Speicher (15, 115, 15a) einen Sekundärantrieb (115c) zum Antreiben des Fahrwerks (12, 112) aufweist.

8. Straßenbaumaschine nach einem der vorangehenden Ansprüche, wobei der Materialbunkereinsatz (14, 114, 14a) eine Bodenöffnung (21) und mehrere daran angrenzende Seitenwände (19, 19a) aufweist,
wobei mindestens eine Seitenwand (19,) bezüglich der Bodenöffnung (21) derart geneigt ist, dass eine Oberkante (19") der geneigten Seitenwand (19) außerhalb der Bodenöffnung (21) liegt,
wobei der sekundäre Speicher (15, 115, 15a) unterhalb der geneigten Seitenwand (19) angeordnet ist.

9. Straßenbaumaschine nach Anspruch 8, wobei ein Winkel (29, 129) zwischen der Seitenwand (19) und der Bodenöffnung (21) mindestens 100°, vorzugsweise mindestens 110°, und/oder höchstens 135°, vorzugsweise höchstens 125°, beträgt.

10. Straßenbaumaschine nach einem der vorangehenden Ansprüche, wobei die geneigte Seitenwand (19) eine Abdeckung für den sekundären Speicher (15, 115, 15a) bildet.

11. Straßenbaumaschine nach einem der vorangehenden Ansprüche, wobei der Materialbunkereinsatz (14, 114, 14a) eine Wärmeisolierung (22, 122) aufweist.

12. Straßenbaumaschine nach einem der vorangehenden Ansprüche, wobei der sekundäre Speicher (15, 115, 15a) über eine Schnittstelle (25, 125, 25a) zum Übertragen von elektrischer Energie oder dem Energiemittel mit der Straßenbaumaschine (1), insbesondere dem Primärantrieb (3, 103) und/oder dem primären Speicher (17, 117), verbindbar ist.

13. Straßenbaumaschine nach einem der vorangehenden Ansprüche, wobei die Straßenbaumaschine (1) ein Straßenfertiger (2) zum Herstellen einer Einbauschicht (ES) aus dem Einbaumaterial (EM) oder ein Beschickerfahrzeug (18) zum Beliefern des Straßenfertigers (2) mit dem Einbaumaterial (EM) ist.

14. Verfahren zum Austauschen eines Materialbunkereinsatzes (14, 114, 14a) mit einem sekundären Speicher (15, 115, 15a) an einer Straßenbaumaschine (1), wobei das Verfahren die Schritte umfasst:
Lösen einer ersten Befestigungsvorrichtung (24) eines ersten Materialbunkereinsatzes (14, 114) von einem Materialbunker (7, 107) der Straßenbaumaschine (1),
Entnehmen des ersten Materialbunkereinsatzes (14, 114) mit einem ersten sekundären Speicher (15, 115) aus dem Materialbunker (7, 107),
Einbringen eines zweiten Materialbunkereinsatzes (14a) mit einem zweiten sekundären Speicher (15a) in den Materialbunker (7, 107), und
Befestigen des zweiten Materialbunkereinsatzes (14a) am Materialbunker (7, 107) mittels einer zweiten Befestigungsvorrichtung (24a), wobei über eine Schnittstelle (25, 125, 25a) elektrische
Energie oder ein Energiemittel zwischen dem sekundären Speicher (15, 15a) und der Straßenbaumaschine (1) übertragbar ist,
wobei vor dem Entnehmen des ersten Materialbunkereinsatzes (14, 114) aus dem Materialbunker (7, 107) eine Verbindung des ersten sekundären Speichers (15, 115) mit der Straßenbaumaschine (1) über eine erste Schnittstelle (25, 125) gelöst wird und/oder
wobei nach dem Befestigen des zweiten Materialbunkereinsatzes (14a) am Materialbunker (7, 107) eine Verbindung des zweiten sekundären Speichers (15a) mit der Straßenbaumaschine (1) über eine zweite Schnittstelle (25a) hergestellt wird.

15. Verfahren zum Betreiben einer Straßenbaumaschine (1), wobei das Verfahren die Schritte umfasst:
Bereitstellen von elektrischer Energie oder einem Energiemittel durch einen primären Speicher (17, 117) der Straßenbaumaschine (1),
Versorgen eines Primärantriebs (3, 103) der Straßenbaumaschine (1) mit elektrischer Energie oder dem Energiemittel durch den primären Speicher (17, 117),
Antreiben eines Fahrwerks (12, 112) der Straßenbaumaschine (1) durch den Primärantrieb (3, 103), und
Bewegen der Straßenbaumaschine (1) durch das Fahrwerk (12, 112),
wobei mindestens ein sekundärer Speicher (15, 115, 15a) den Primärantrieb (3, 103) mit elektrischer Energie oder Energiemittel versorgt und/oder wobei der sekundäre Speicher (15, 115, 15a) das Fahrwerk (12, 112) antreibt,
wobei der sekundäre Speicher (15, 115, 15a) an einem Materialbunkereinsatz (14, 114, 14a) zur Aufnahme von Einbaumaterial (EM) montiert wird,
wobei der Materialbunkereinsatz (14, 114, 14a) lösbar an einem Materialbunker (7, 107) der Straßenbaumaschine (1) montiert wird.

## Claims

1. A road-making machine (1), comprising:
running gear (12, 112) for moving the road-making machine (1),
a primary drive (3, 103) for driving the running gear (12, 112),
a primary storage (17, 117) for supplying electric energy or a propellant to the primary drive (3, 103),
a hopper (7, 107) and
a hopper insert (14, 114, 14a) for receiving paving material (EM),
wherein the hopper insert (14, 114, 14a) is detachably mounted to the hopper (7, 107),
wherein the hopper (14, 114,14a) includes at least one secondary storage (15, 115, 15a) for driving the running gear (12, 112) and/or for supplying electric energy or the propellant to the primary drive (3, 103).

2. The road-making machine according to claim 1, wherein the primary drive (3, 103) is an electric motor (3a), in particular including a fuel cell, or an internal combustion engine (103a).

3. The road making machine according to claims 1 or 2, wherein the secondary storage (15, 115, 15a) comprises an auxiliary battery, in particular including a battery management system, for storing electrical energy for the primary drive (3, 103).

4. The road making machine according to any one of the preceding claims, wherein the propellant is hydrogen and/or ammonia and/or fossil fuel and/or a synthetic fuel.

5. The road making machine according to anyone of the preceding claims, wherein the secondary storage (15, 115, 15a) comprises an auxiliary tank (115b) for storing in particular liquid or gaseouspropellant for the primary drive (3, 103).

6. The road making machine according to claim 5, wherein the auxiliary tank (115b) is configured for storing pressurized hydrogen or storing chemically bonded hydrogen, in particular bonded by means of LOHC or ammonia.

7. The road making machine according to any one of the preceding claims, wherein the secondary storage (15, 115, 15a) includes a secondary drive (115c) for driving the running gear (12, 112).

8. The road making machine according to any one of the preceding claims, wherein the hopper insert (14, 114, 14a) includes a bottom opening (21) and a plurality of side walls (19, 19a) adjacent thereto,
wherein at least one side wall (19) is inclined with respect to the bottom opening (21) such that an upper edge (19") of the inclined side wall (19) is provided outside the bottom opening (21),
wherein the secondary storage (15, 115, 15a) is provided below the inclined side wall (19).

9. The road making machine according to claim 8, wherein an angle (29, 129) between the side wall (19) and the bottom opening (21) is 100° or bigger, preferably at least 110° and/or 135° or smaller, preferably 105° or bigger.

10. The road making machine according to anyone of the preceding claims, wherein the inclined side wall (19) defines a cover for the secondary storage (15, 115, 15a).

11. The road making machine according to any one of the preceding claims, wherein the hopper insert (14, 114, 14a) includes a thermal insulation (22, 122).

12. The road making machine according to anyone of the preceding claims, wherein the secondary storage (15, 115, 15a) may be coupled to the road-making machine (1), in particular to the primary drive (3, 103) and/or to the primary storage (17, 117) via an interface (25, 125, 25a) for transferring electric energy or the propellant.

13. The road making machine according to anyone of the preceding claims, wherein the road-making machine (1) is a road finisher (2) for making a layer (ES) of paving material from the paving material (EM) or a charging vehicle (18) for supplying paving material (EM) to the road finisher (2).

14. A method for exchanging a hopper insert (14, 114, 14a) including a secondary storage (15, 115, 15a) in a road-making machine (1), wherein the method comprises the following steps:
detaching a first fastening device (24) of a first hopper insert (14, 114) from a hopper (7, 107) of the road-making machine (1),
removing the first hopper insert (14, 114) including a secondary storage (15, 115) from the hopper (7, 107),
inserting a second hopper insert (14a) including a second secondary storage (15a) into the hopper (7, 107), and
fastening the second hopper insert (14a) to the hopper (7, 107) by means of a second fastening device (24a), wherein electric energy or a propellant may be transferred between the secondary storage (15, 15a) and the road-making machine (1) via an interface (25, 125, 25a),
wherein prior to removing the first hopper insert (14, 114) from the hopper (7, 107) a connection of the first secondary storage (15, 115) with the road-making machine (1) via a first interface (25, 125) is separated and/or
wherein subsequent to fastening the second hopper insert (14a) to the hopper (7, 107) a connection of the second secondary storage (15a) with the road-making machine (1) via a second interface (25a) is established.

15. A method for operating a road-making machine (1), wherein the method comprises the following steps:
providing electric energy or a propellant by a primary storage (17, 117) of the road-making machine (1),
supplying electric energy or the propellant by the primary storage (17, 117) to the primary drive (3, 103) of the road-making machine (1),
driving running gear (12, 112) of the road-making machine (1) by the primary drive (3, 103), and
moving the road-making machine (1) by the running gear (12, 112),
wherein at least a secondary storage (15, 115, 15a) supplies electric energy or propellant to the primary drive (3, 103) and/or wherein the secondary storage (15, 115, 15a) drives the running gear (12, 112),
wherein the secondary storage (15, 115, 15a) is mounted to a hopper insert (14, 114, 14a) for receiving paving material (EM),
wherein the hopper insert (14, 114, 14a) is detachably mounted to a hopper (7, 107) of the road-making machine (1).

## Revendications

1. Engin de construction routière (1), comprenant :
un train de roulement (12, 112) permettant de déplacer l'engin de construction routière (1),
un entraînement primaire (3, 103) permettant d'entraîner le train de roulement (12, 112),
un dispositif de stockage primaire (17, 117) permettant d'alimenter l'entraînement primaire (3, 103) avec de l'énergie électrique ou avec une source d'énergie,
une trémie à matériau (7, 107) et
un insert de trémie à matériau (14, 114, 14a) permettant d'accueillir du matériau d'œuvre (EM),
dans lequel l'insert de trémie à matériau (14, 114, 14a) est monté de manière amovible au niveau de la trémie à matériau (7, 107),
dans lequel l'insert de trémie à matériau (14, 114, 14a) présente au moins un dispositif de stockage secondaire (15, 115, 15a) permettant d'entraîner le train de roulement (12, 112) et/ou permettant d'alimenter l'entraînement primaire (3, 103) avec de l'énergie électrique ou avec une source d'énergie.

2. Engin de construction routière selon la revendication 1, dans lequel l'entraînement primaire (3, 103) est un moteur électrique (3a), en particulier comprenant une pile à combustible, ou un moteur à combustion interne (103a).

3. Engin de construction routière selon la revendication 1 ou 2, dans lequel le dispositif de stockage secondaire (15, 115, 15a) comprend une batterie supplémentaire, en particulier comprenant un système de gestion de batterie, permettant de stocker de l'énergie électrique pour l'entraînement primaire (3, 103).

4. Engin de construction routière selon l'une quelconque des revendications précédentes, dans lequel la source d'énergie est de l'hydrogène et/ou de l'ammoniac et/ou du carburant fossile et/ou un carburant synthétique.

5. Engin de construction routière selon l'une quelconque des revendications précédentes, dans lequel le dispositif de stockage secondaire (15, 115, 15a) comprend un réservoir supplémentaire (115b) permettant de stocker des sources d'énergie, en particulier liquides ou gazeuses, pour l'entrainement primaire (3, 103).

6. Engin de construction routière selon la revendication 5, dans lequel le réservoir supplémentaire (115b) est conçu pour un stockage d'hydrogène sous pression ou un stockage d'hydrogène lié chimiquement, en particulier lié au moyen de LOHC (liquide organique transporteur d'hydrogène) ou d'ammoniac.

7. Engin de construction routière selon l'une quelconque des revendications précédentes, dans lequel le dispositif de stockage secondaire (15, 115, 15a) présente un entraînement secondaire (115c) permettant d'entraîner le train de roulement (12, 112).

8. Engin de construction routière selon l'une quelconque des revendications précédentes, dans lequel l'insert de trémie à matériau (14, 114, 14a) présente une ouverture de fond (21) et plusieurs parois latérales (19, 19a) adjacentes à ladite ouverture de fond,
dans lequel au moins une paroi latérale (19,) est inclinée par rapport à l'ouverture de fond (21) de telle manière qu'un bord supérieur (19") de la paroi latérale inclinée (19) se situe à l'extérieur de l'ouverture de fond (21),
dans lequel le dispositif de stockage secondaire (15, 115, 15a) est agencé au-dessous de la paroi latérale (19) inclinée.

9. Engin de construction routière selon la revendication 8, dans lequel un angle (29, 129) entre la paroi latérale (19) et l'ouverture de fond (21) est d'au moins 100°, de manière préférée d'au moins 110°, et/ou d'au plus 135°, de manière préférée d'au plus 125°.

10. Engin de construction routière selon l'une quelconque des revendications précédentes, dans lequel la paroi latérale (19) inclinée forme un couvercle pour le dispositif de stockage secondaire (15, 115, 15a).

11. Engin de construction routière selon l'une quelconque des revendications précédentes, dans lequel l'insert de trémie à matériau (14, 114, 14a) présente une isolation thermique (22, 122).

12. Engin de construction routière selon l'une quelconque des revendications précédentes, dans lequel le dispositif de stockage secondaire (15, 115, 15a) peut être relié à l'engin de construction routière (1), en particulier à l'entraînement primaire (3, 103) et/ou au dispositif de stockage primaire (17, 117), par l'intermédiaire d'une interface (25, 125, 25a) permettant de transférer l'énergie électrique ou la source d'énergie.

13. Engin de construction routière selon l'une quelconque des revendications précédentes, dans lequel l'engin de construction routière (1) est un finisseur routier (2) permettant de fabriquer une couche d'œuvre (ES) à partir du matériau d'œuvre (EM) ou un véhicule de chargement (18) permettant de fournir le finisseur routier (2) en matériau d'œuvre (EM).

14. Procédé de remplacement d'un insert de trémie à matériau (14, 114, 14a) par un dispositif de stockage secondaire (15, 115, 15a) sur un engin de construction routière (1), dans lequel le procédé comprend les étapes consistant à :
détacher un premier dispositif de fixation (24) d'un premier insert de trémie à matériau (14, 114) d'une trémie à matériau (7, 107) de l'engin de construction routière (1),
retirer de la trémie à matériau (7, 107) le premier insert de trémie à matériau (14, 114) muni d'un premier dispositif de stockage secondaire (15, 115),
introduire dans la trémie à matériau (7, 107) un second insert de trémie à matériau (14a) muni d'un second dispositif de stockage secondaire (15a), et
fixer le second insert de trémie à matériau (14a) à la trémie à matériau (7, 107) au moyen d'un second dispositif de fixation (24a), dans lequel de l'énergie électrique ou une source d'énergie peut être transférée entre le dispositif de stockage secondaire (15, 15a) et l'engin de construction routière (1) par l'intermédiaire d'une interface (25, 125, 25a),
dans lequel, avant le retrait du premier insert de trémie à matériau (14, 114) hors de la trémie à matériau (7, 107), une connexion entre le premier dispositif de stockage secondaire (15, 115) et l'engin de construction routière (1) par l'intermédiaire d'une première interface (25, 125) est interrompue et/ou
dans lequel, après la fixation du second insert de trémie à matériau (14a) sur la trémie à matériau (7, 107), une connexion entre le second dispositif de stockage secondaire (15a) et l'engin de construction routière (1) par l'intermédiaire d'une seconde interface (25a) est établie.

15. Procédé de fonctionnement d'un engin de construction routière (1), dans lequel le procédé comprend les étapes consistant à :
fournir de l'énergie électrique ou une source d'énergie grâce à un dispositif de stockage primaire (17, 117) de l'engin de construction routière (1),
alimenter un entraînement primaire (3, 103) de l'engin de construction routière (1) avec l'énergie électrique ou avec la source d'énergie grâce au dispositif de stockage primaire (17, 117),
entrainer un train de roulement (12, 112) de l'engin de construction routière (1) grâce à l'entraînement primaire (3, 103), et
déplacer l'engin de construction routière (1) grâce au train de roulement (12, 112),
dans lequel au moins un dispositif de stockage secondaire (15, 115, 15a) alimente l'entraînement primaire (3, 103) avec l'énergie électrique ou avec la source d'énergie et/ou dans lequel le dispositif de stockage secondaire (15, 115, 15a) entraîne le train de roulement (12, 112),
dans lequel le dispositif de stockage secondaire (15, 115, 15a) est monté au niveau d'un insert de trémie à matériau (14, 114, 14a) afin d'accueillir du matériau d'œuvre (EM),
dans lequel l'insert de trémie à matériau (14, 114, 14a) est monté de manière amovible au niveau d'une trémie à matériau (7, 107) de l'engin de construction routière (1).
